# EUROPEAN PATENT APPLICATION

(11) **EP 4 471 936 A2**
(43) Date of publication of application: **04.12.2024**
(21) Application number: 24178380.2
(22) Date of filing: 28.05.2024
(51) Int. Cl.: H01M 10/613, H01M 10/647, H01M 10/6555, H01M 10/6557

(54) **SECONDARY BATTERY**

(30) Priority: 29.05.2023 JP 2023087860
(71) Applicant: TOYOTA BOSHOKU KABUSHIKI KAISHA, Kariya-shi, Aichi 448-8651 (JP)
(72) Inventor: KASUYA, Masahiro, Kariya-shi, 448-8651 (JP); SUMIYA, Yoshiaki, Kariya-shi, 448-8651 (JP); IKEDA, Kenji, Kariya-shi, 448-8651 (JP); NOMURA, Takeshi, Kariya-shi, 448-8651 (JP); TSUJIMURA, Akifumi, Kariya-shi, 448-8651 (JP); KAMIO, Yoshiki, Kariya-shi, 448-8651 (JP); SHIKIDA, Takasuke, Kariya-shi, 448-8651 (JP)
(74) Representative: TBK

(57) **Abstract**

[Object] A high cooling effect is obtained.

[Solution] A secondary battery includes a plurality of cells (21) arranged at intervals, and a plurality of cooling plates (31) each disposed between the cells (21) adjacent to each other so as to be stacked with no gap, and a heat absorbing flow path (36) which allows a refrigerant to flow is formed in the cooling plates (31). The refrigerant flowing through the heat absorbing flow path (36) of the cooling plate (31) takes heat from the cells (21), thereby cooling the cells (21). Since there is no gap between the cooling plates (31) and the cells (21), a high cooling effect can be obtained.

## Description

### Technical Field

The present invention relates to a secondary battery.

### Background Art

Patent Literature 1 discloses a device in which a plurality of battery modules stacked and disposed with gaps therebetween is accommodated in a case and the battery modules are cooled by causing air fed into the case to flow into the gaps of the battery modules.

### Citation List

### Patent Literature

Patent Literature 1: JP 2018-110072 A

### Summary of Invention

### Technical Problem

Since air has a low heat transfer coefficient, a sufficient cooling effect cannot be obtained only by bringing the air into contact with surfaces of the battery modules.

The present disclosure has been completed based on the above circumstances, and an object thereof is to obtain a high cooling effect.

### Solution to Problem

A secondary battery of the present disclosure includes:
a plurality of cells arranged at intervals;
a plurality of cooling plates each disposed between the cells adjacent to each other so as to be stacked with no gap therebetween, and
a heat absorbing flow path that allows a refrigerant to flow is formed in the cooling plates.

### Advantageous Effects of Invention

In the secondary battery of the present disclosure, there is no gap between the cooling plates and the cells, so that a high cooling effect can be obtained.

### Brief Description of Drawings

Fig. 1 is a perspective view of a secondary battery according to a first embodiment.
Fig. 2 is an exploded perspective view illustrating a state in which cells and cooling plates are alternately disposed.
Fig. 3 is a partially enlarged front view illustrating a stacked structure of the cells and cooling plates.
Fig. 4 is a perspective view of a cooling plate as viewed obliquely from above.
Fig. 5 is a perspective view of the cooling plate as viewed obliquely from below.
Fig. 6 is a plan cross-sectional view of the cooling plate.
Fig. 7 is a partially enlarged cross-sectional view illustrating a structure of an upstream end portion of a feed path.
Fig. 8 is a partially enlarged cross-sectional view illustrating a structure of a downstream end portion of the feed path.
Fig. 9 is a partially enlarged cross-sectional view illustrating a structure of an upstream end portion of a discharge path.
Fig. 10 is a partially enlarged cross-sectional view illustrating a structure of a downstream end portion of the discharge path.
Fig. 11 is a partially enlarged cross-sectional view of Fig. 7.

### Description of Embodiments

Desirable embodiments of the present disclosure will now be described. Any combination of a plurality of the following embodiments within a range not causing inconsistency is also included in the embodiments for carrying out the invention.
(1) A plurality of cells arranged at intervals, and a plurality of cooling plates each disposed between the cells adjacent to each other so as to be stacked with no gap therebetween are provided, and a heat absorbing flow path that allows a refrigerant to flow is formed in the cooling plates. The refrigerant flowing through the heat absorbing flow path of the cooling plates takes heat from the cells, whereby the cells are cooled. Since there is no gap between the cooling plates and the cells, a high cooling effect can be obtained.
(2) In (1), a ring-shaped spacer is disposed between the cooling plates adjacent to each other, and a feed/discharge path that communicates with a plurality of the heat absorbing flow paths is provided inside the spacer. The spacer can prevent excessive pressure applied to the cells. In addition, since the spacer also has a function as a feed/discharge path for feeding the refrigerant to the cooling plates and discharging the refrigerant from the cooling plates, the number of parts can be reduced as compared with a case where a feed/discharge path is provided separately from the spacer.
(3) In (2), a large-diameter ring-shaped member attached to one-side outer surface of the cooling plate, and a small-diameter ring-shaped member attached to another-side outer surface of the cooling plate are provided, and the spacer is constituted by fitting the small-diameter ring-shaped member of one of two of the cooling plates adjacent to each other into the large-diameter ring-shaped member of another of the cooling plates. By fitting the large-diameter ring-shaped member and the small-diameter ring-shaped member, the adjacent cooling plates can be positioned.
(4) In (3), a seal member is provided between the large-diameter ring-shaped member and the small-diameter ring-shaped member. The seal member can prevent the refrigerant from leaking from a gap between the large-diameter ring-shaped member and the small-diameter ring-shaped member.
(5) In (2) to (4), the spacer is disposed at each of both ends of the cooling plates in a flow direction of the refrigerant, the feed/discharge path includes a feed path that feeds the refrigerant to a plurality of heat absorbing flow paths and a discharge path that discharges the refrigerant having passed through the plurality of heat absorbing flow paths, the feed path is constituted by a plurality of the spacers disposed at one end of the cooling plates, and the discharge path is constituted by a plurality of the spacers disposed at another end of the cooling plates. In the heat absorbing flow paths, the refrigerant flows in one direction without being stagnated, so that heat absorbing efficiency is excellent.
(6) In (5), a downstream end of the feed path and an upstream end of the discharge path are closed at one end in a stacking direction of the cells and the cooling plates. An upstream end of the feed path and a downstream end of the discharge path can be arranged in the same direction in the stacking direction of the cells and the cooling plates.
(7) In (1) to (6), each of the cells includes a layered electrode body and a tab having a thickness in a stacking direction thinner than a thickness of the layered electrode body, and heat dissipating grease is interposed between an outer surface of a thick-walled region of the cell, in which the layered electrode body is accommodated, and the cooling plates. Even when the secondary battery receives vibration, a gap is not generated between the outer surface of the cell and the cooling plates, so that it is possible to prevent a decrease in cooling efficiency due to the gap.
(8) In (1) to (7), each of the cells includes a layered electrode body and a tab having a thickness in a stacking direction thinner than a thickness of the layered electrode body, and a heat dissipation sheet is attached to an outer surface of a thin-walled region of the cell in which the tab is accommodated. A thin-walled region of the cell is disposed between the cooling plates with a gap which is a dead space, but since the heat dissipation sheet is disposed in the thin-walled region using the dead space, it is possible to cool the thin-walled region while avoiding an increase in size in the stacking direction.

### [First Embodiment]

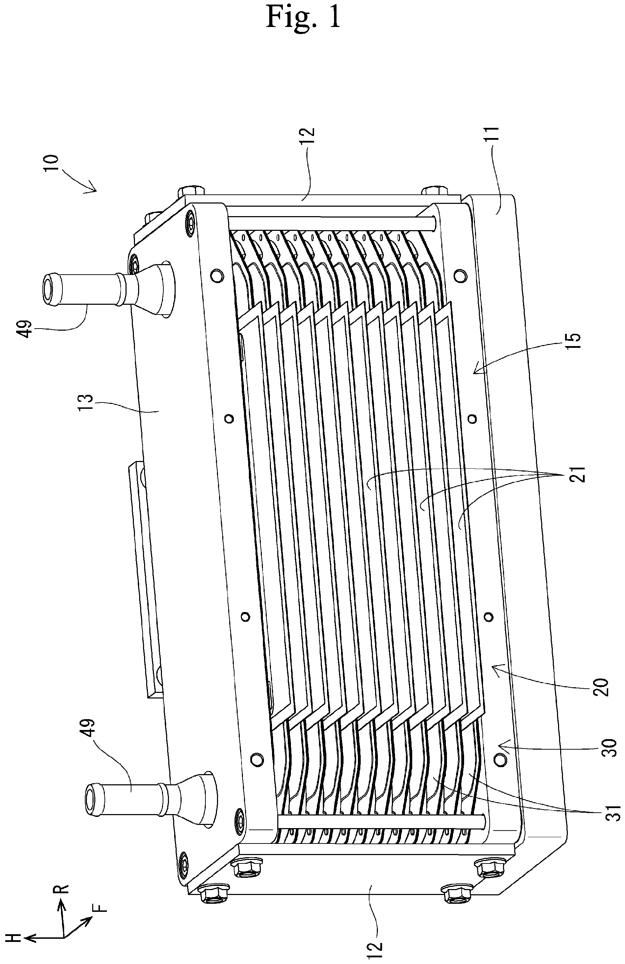

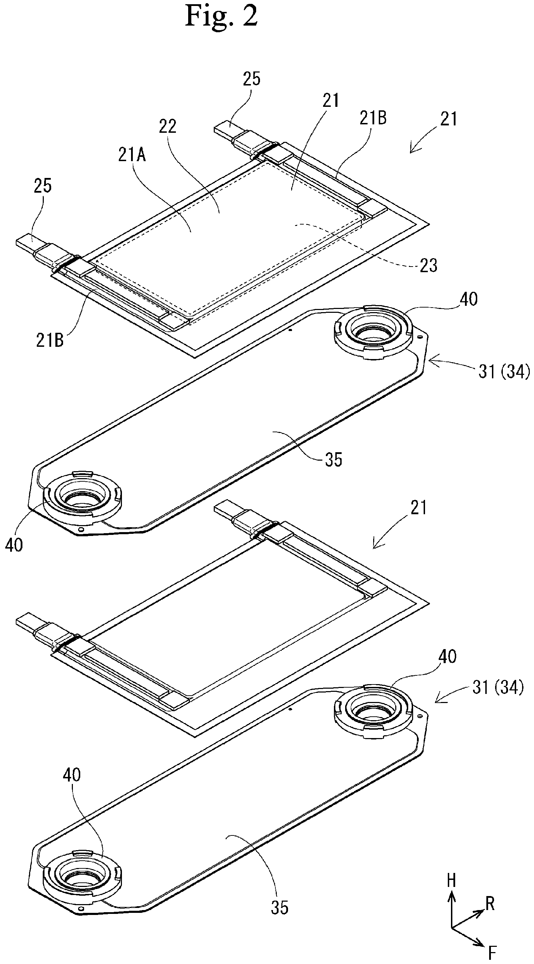

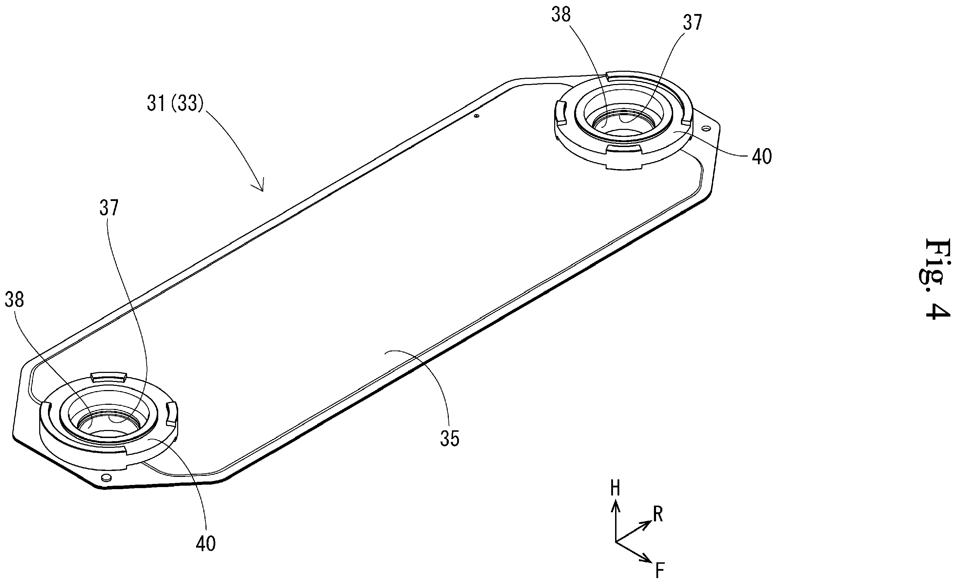

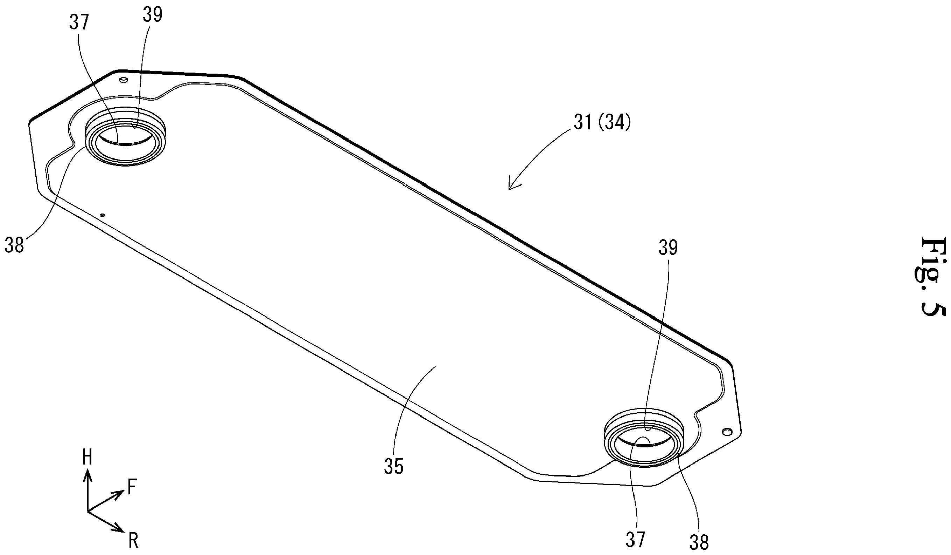

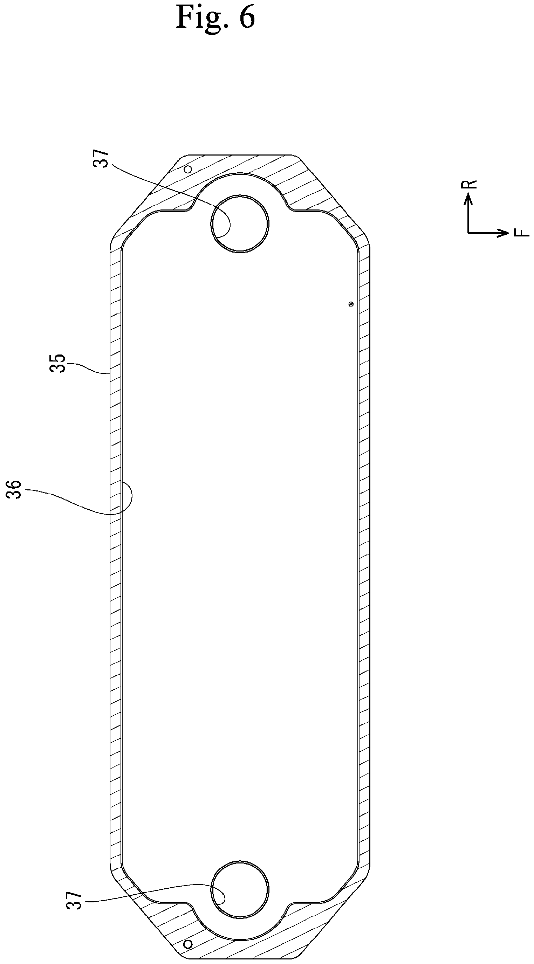

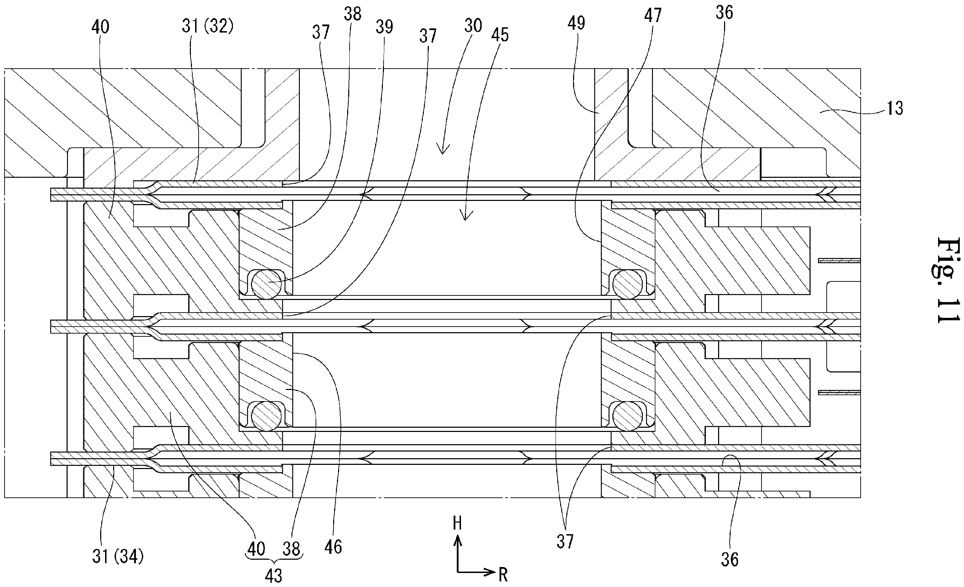

A first embodiment embodying the present disclosure will be described with reference to Figs. 1 to 11. Note that the present invention is not limited to these exemplifications, but is indicated by the claims, and is intended to include all modifications within the meaning and scope equivalent to the claims. In the first embodiment, as for a front-rear direction, an F direction in Figs. 1, 2, and 4 to 6 is defined as a front. As for a left-right direction, an R direction in Figs. 1 to 11 is defined as a right direction. The left-right direction and a width direction are used synonymously. As for a vertical direction, an H direction in Figs. 1 to 5 and 7 to 11 is defined as upward.

As illustrated in Fig. 1, a secondary battery of the first embodiment is constituted by assembling a frame 10 and a stacked module 15. The frame 10 includes a bottom plate 11, a pair of left and right side plates 12, and an upper plate 13, and has a box shape with both front and rear surfaces opened. The stacked module 15 is mounted in a state of being positioned in the frame 10. The stacked module 15 is constituted by assembling a power storage device 20 and a cooling device 30 for cooling the power storage device 20.

The power storage device 20 is constituted by arranging a plurality of cells 21 in a positional relationship in which the cells are separated in the vertical direction. Each of the cells 21 has a flat shape with a small height dimension as a whole. The cell 21 accommodates a layered electrode body 23 and an electrolytic solution (not illustrated) in an exterior body 22. The exterior body 22 is made of a pair of laminated sheets in which a sealing material is bonded to an aluminum sheet-like base material. The layered electrode body 23 is a known member in which a positive electrode plate, a negative electrode plate, and a separator are stacked in the vertical direction.

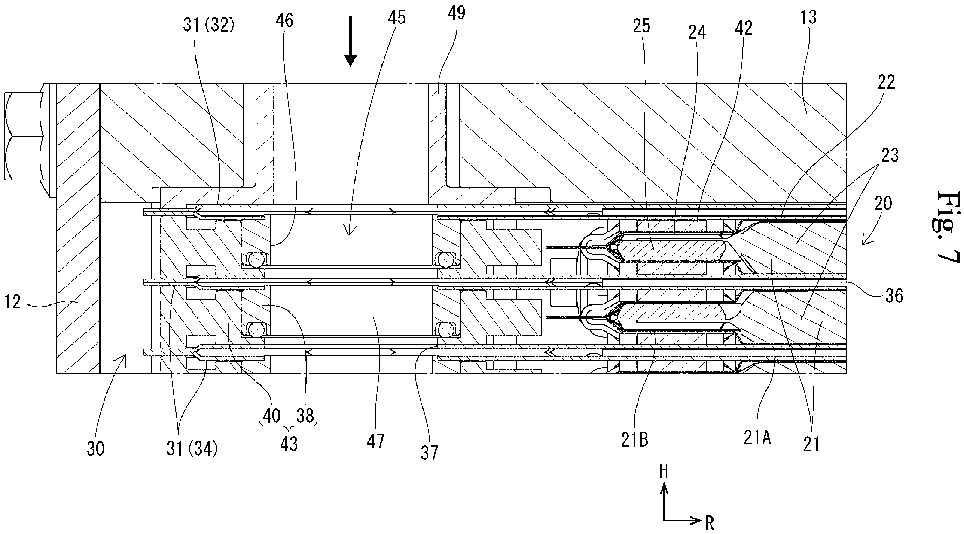

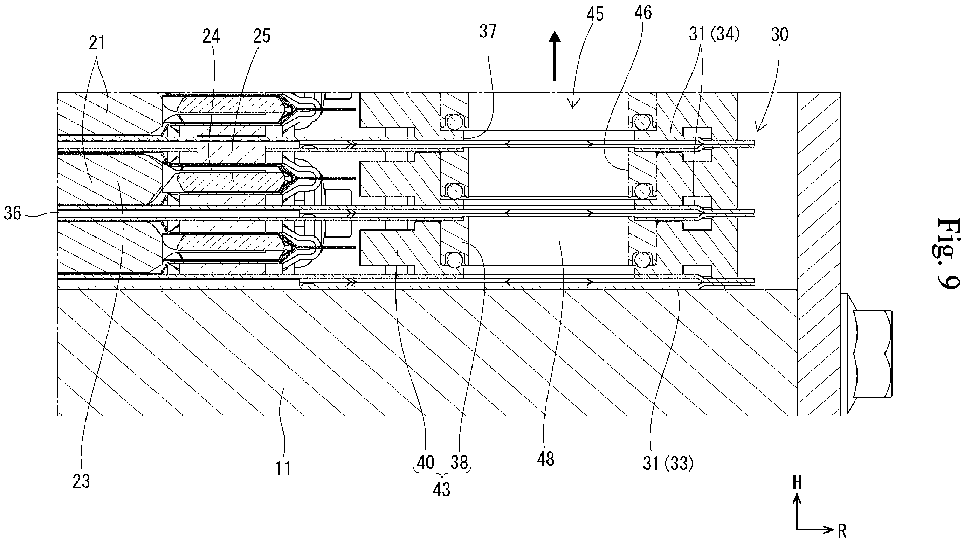

As illustrated in Figs. 7 and 9, on both left and right side edges of the layered electrode body 23, connecting portions 24, each of which consists of an uncoated portion of a positive electrode plate and a negative electrode plate, are formed, and a tab 25 elongated in the front-rear direction is fixed to each of the connecting portions 24. A rear end portion of the tab 25 protrudes to the outside of the exterior body 22. A thickness (vertical dimension) of the tab 25 is thinner than a thickness of the layered electrode body 23. The cell 21 includes a thick-walled region 21A which wraps the layered electrode body 23 and a thin-walled region 21B which wraps the tab 25. A step portion due to a difference in thickness between the thick-walled region 21A and the thin-walled region 21B is formed at a boundary between the thick-walled region 21A and the thin-walled region 21B of the upper and lower surfaces of the exterior body 22.

The cooling device 30 includes a plurality of cooling plates 31 arranged vertically. The cooling plate 31 has a flat shape having a height dimension extremely smaller than dimensions in the front-rear direction and the left-right direction. Each of the cooling plates 31 is disposed between the cells 21. The cells 21 and the cooling plates 31 are alternately stacked in the vertical direction to constitute the stacked module 15.

In the cooling device 30, a refrigerant flow path 45 for allowing a refrigerant to flow is provided. The refrigerant flow path 45 includes a feed/discharge path 46 and a plurality of heat absorbing flow paths 36. The feed/discharge path 46 includes a feed path 47 extending in the vertical direction formed at one end (left end in the present embodiment) of the cooling plate 31 in the left-right direction, and a discharge path 48 extending in the vertical direction formed at the other end (right end in the present embodiment) of the cooling plate 31 in the left-right direction. The plurality of heat absorbing flow paths 36 are individually formed inside the plurality of cooling plates 31.

An upstream end of the feed path 47 and a downstream end of the discharge path 48 are opened on an upper surface of the stacked module 15. An upstream end of the feed path 47 and a downstream end of the discharge path 48 are connected to a heat exchanger (not illustrated) via each cylindrical connection port 49. A downstream end of the feed path 47 and an upstream end of the discharge path 48 located at a lower end of the stacked module 15 are closed. The feed path 47 and the discharge path 48 communicate with all of the plurality of heat absorbing flow paths 36. The feed path 47 and the discharge path 48 communicate with each other only through the heat absorbing flow paths 36.

A low-temperature refrigerant pumped from the heat exchanger to the upstream end of the feed path 47 flows downward in the feed path 47 and branches halfway to flow into the heat absorbing flow path 36 of each of the cooling plates 31. The refrigerant takes heat from the cell 21 in the process of horizontally passing through the heat absorbing flow path 36, and flows into the discharge path 48. The refrigerant having flowed into the discharge path 48 flows upward in the discharge path 48 while joining the refrigerant having passed through the other heat absorbing flow paths 36, and returns to the heat exchanger from the downstream end of the discharge path 48. The cells 21 are cooled by continuous flow of the refrigerant described above. As the refrigerant, cooling water, air, hydrocarbon, or the like can be used.

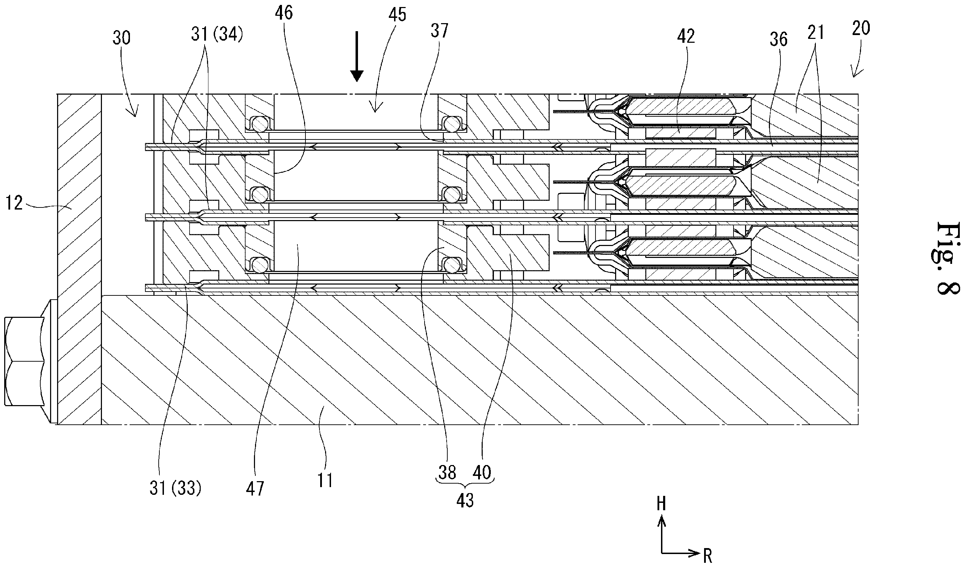

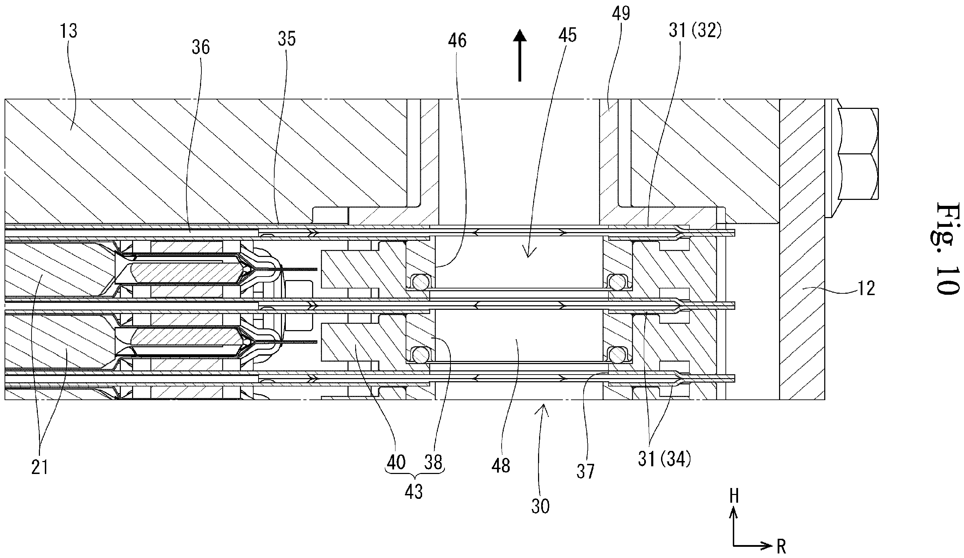

Next, a detailed structure of the cooling device 30 will be described. The plurality of cooling plates 31 include one connection plate 32 (See Figs. 7 and 10.) disposed at an uppermost end of the stacked module 15, a closing plate 33 (See Figs. 8 and 9.) disposed at a lowermost end of the stacked module 15, and a plurality of interlayer plates 34 (See Figs. 7 to 10.) disposed between the cells 21. The connection plate 32, the closing plate 33, and each of the interlayer plates 34 include a plate body 35 having a common basic shape. The heat absorbing flow path 36 for allowing the refrigerant to flow is formed inside the plate body 35.

In the connection plate 32, circular openings 37 vertically penetrating the plate body 35 are formed at both left and right ends of the plate body 35. The heat absorbing flow path 36 is opened to an upper surface and a lower surface of the connection plate 32 through the upper and lower openings 37. Circular small-diameter ring-shaped members 38 each disposed concentrically with a pair of the openings 37 are fixed to a lower surface of the plate body 35. The connection plate 32 includes the plate body 35 and a pair of the small-diameter ring-shaped members 38. A seal member 39 is attached to a lower end surface of each of the small-diameter ring-shaped members 38.

In the closing plate 33, the openings 37 opened to an upper surface of the plate body 35 are formed at both left and right ends of the plate body 35. The heat absorbing flow path 36 is opened only to an upper surface of the closing plate 33 through the openings 37. The opening 37 is not formed on a lower surface of the closing plate 33. Circular large-diameter ring-shaped members 40 each disposed concentrically with the openings 37 are fixed to the upper surface of the plate body 35. The closing plate 33 includes the plate body 35 and a pair of the large-diameter ring-shaped members 40.

In the interlayer plate 34, the circular openings 37 vertically penetrating the plate body 35 are formed at both left and right ends of the plate body 35. The heat absorbing flow path 36 is opened to the upper surface and the lower surface of the connection plate 32 through the upper and lower openings 37. The circular large-diameter ring-shaped members 40 each disposed concentrically with the openings 37 are fixed to the upper surface of the plate body 35. The circular small-diameter ring-shaped members 38 each disposed concentrically with the openings 37 are fixed to the lower surface of the plate body 35. The seal member 39 is attached to the lower end surface of each of the small-diameter ring-shaped members 38. The interlayer plate 34 includes the plate body 35, the pair of small-diameter ring-shaped members 38, and the pair of large-diameter ring-shaped members 40.

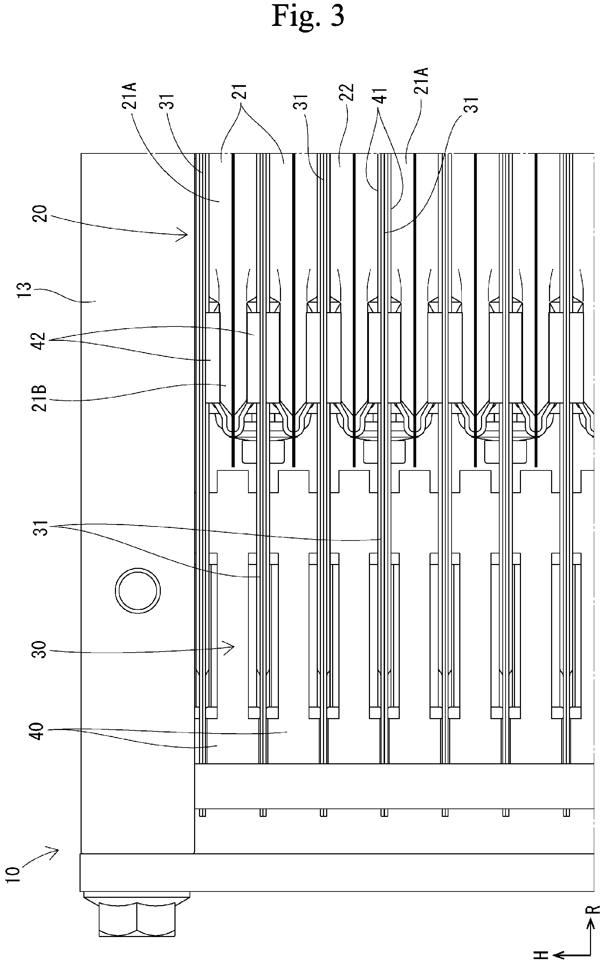

By stacking the plurality of cells 21 and the plurality of cooling plates 31, the stacked module 15 is constituted. As illustrated in Fig. 3, heat dissipating grease 41 is interposed between the outer surface of the exterior body 22 in the thick-walled region 21A of the cell 21, in which the layered electrode body 23 is accommodated, and the outer surface of the plate body 35. The heat dissipating grease 41 has a function of preventing generation of a gap between the exterior body 22 and the cooling plate 31 and a function of facilitating transmission of heat of the cell 21 from the exterior body 22 to the plate body 35. In the cell 21, the thin-walled region 21B in which the tab 25 is accommodated is disposed between the cooling plates 31 with a gap which is a dead space. Using this dead space, a heat dissipation sheet 42 is attached to an outer surface of the thin-walled region 21B. The heat dissipation sheet 42 is in close contact with the plate body 35, and exerts a function of transmitting heat of the outer surface of the exterior body 22 in the thin-walled region 21B to the plate body 35.

As illustrated in Figs. 7 to 11, the small-diameter ring-shaped member 38 arranged on the lower surface of the cooling plate 31 that is located on the upper side is concentrically fitted in the large-diameter ring-shaped member 40 arranged on the upper surface of the cooling plate 31 that is located on the lower side. The large-diameter ring-shaped member 40 and the small-diameter ring-shaped member 38 fitted to each other constitute an annular spacer 43. The spacer 43 is interposed between the cooling plates 31 vertically adjacent to each other at each of the left and right ends of the cooling plates 31, and positions the cooling plates 31 in the vertical direction. The spacer 43 ensures a space for accommodating the cell 21, so that the cell 21 is disposed between the upper and lower cooling plates 31 without being crushed. The feed path 47 and the discharge path 48 described above are formed by a plurality of the spacers 43 and the openings 37 at both the left and right ends of the stacked module 15. The cylindrical connection ports 49 are fixed to the upper surface of the connection plate 32.

The secondary battery of the first embodiment includes the plurality of cells 21 arranged at intervals, and the plurality of cooling plates 31 each disposed between the cells 21 adjacent to each other so as to be stacked with no gap therebetween. The heat absorbing flow path 36 which allows the refrigerant to flow is formed in the cooling plates 31. The refrigerant flowing through the heat absorbing flow path 36 of the cooling plates 31 takes heat from the cells 21, whereby the cells 21 are cooled. Since there is no gap between the cooling plates 31 and the cells 21, the secondary battery of the first embodiment exhibits a high cooling function.

The ring-shaped spacer 43 is disposed between the cooling plates 31 adjacent to each other. The spacer 43 can prevent the cooling plates 31 from applying excessive pressure to the cell 21. Inside the spacer 43, the feed/discharge path 46 which communicates with the plurality of heat absorbing flow paths 36 is provided. The spacer 43 also functions as a feed/discharge path 46 for feeding the refrigerant to the cooling plate 31 and discharging the refrigerant from the cooling plates 31. As a result, the number of components can be reduced as compared with the case where the feed/discharge path 46 is provided separately from the spacer 43.

The large-diameter ring-shaped member 40 is attached to one-side outer surface (upper surface) of both the upper and lower outer surfaces of the cooling plate 31 (the closing plate 33 and the interlayer plate 34). The small-diameter ring-shaped member 38 is attached to the otherside outer surface (lower surface) of both the upper and lower outer surfaces of the cooling plate 31 (the connection plate 32 and the interlayer plate 34). The spacer 43 is constituted by fitting the small-diameter ring-shaped member 38 of one of two adjacent cooling plates 31 into the large-diameter ring-shaped member 40 of the other cooling plate 31. By fitting the large-diameter ring-shaped member 40 and the small-diameter ring-shaped member 38, the adjacent cooling plates 31 can be positioned.

The seal member 39 is provided between the large-diameter ring-shaped member 40 and the small-diameter ring-shaped member 38. The seal member 39 is disposed so as to be sandwiched between the large-diameter ring-shaped member 40 and the small-diameter ring-shaped member 38 in the stacking direction of the cells 21 and the cooling plates 31. The seal member 39 can prevent the refrigerant in the refrigerant flow path 45 from leaking from the gap between the large-diameter ring-shaped member 40 and the small-diameter ring-shaped member 38.

The spacers 43 are disposed at both ends of the cooling plate 31 in a flow direction of the refrigerant (left-right direction). The feed/discharge path 46 includes the feed path 47 which feeds the refrigerant to the plurality of heat absorbing flow paths 36, and the discharge path 48 which discharges the refrigerant having passed through the plurality of heat absorbing flow paths 36. The feed path 47 is constituted by the plurality of spacers 43 disposed at one end of the cooling plates 31. The discharge path 48 is constituted by the plurality of spacers 43 disposed at the other end of the cooling plates 31. In the heat absorbing flow paths 36, the refrigerant flows in one direction from a side of the feed path 47 toward a side of the discharge path 48 without being stagnated, so that heat absorbing efficiency is excellent.

The downstream end of the feed path 47 and the upstream end of the discharge path 48 are closed at one end (lower end) in the stacking direction of the cells 21 and the cooling plates 31. As a result, the upstream end of the feed path 47 and the downstream end of the outflow can be arranged in the same direction (upward) in the stacking direction of the cells 21 and the cooling plates 31.

Each of the cells 21 includes the layered electrode body 23 and the tab 25 having a thickness in the stacking direction thinner than that of the layered electrode body 23. The heat dissipating grease 41 is interposed between the outer surface of the thick-walled region 21A of the cell 21, in which the layered electrode body 23 is accommodated, and the cooling plates 31. Even when the secondary battery receives vibration, a gap is not generated between the outer surface of the cell 21 and the cooling plates 31, so that it is possible to prevent a decrease in cooling efficiency due to the gap. The heat dissipation sheet 42 is attached to the outer surface of the thin-walled region 21B of the cell 21 in which the tab 25 is accommodated. A thin-walled region 21B of the cell 21 is disposed between the cooling plates 31 with a gap which is a dead space, but since the heat dissipation sheet 42 is disposed in the thin-walled region 21B using the dead space, it is possible to cool the thin-walled region 21B while avoiding an increase in size in the stacking direction.

### <Other Embodiments>

The present invention is not limited to the embodiment described with reference to the above description and drawings, and for example, the following embodiments are also included in the technical scope of the present invention.

In the first embodiment, the spacer may be formed of a single component fixed to one of the upper surface and the lower surface of the cooling plate, or may be formed of a single component separate from the cooling plate.

In the first embodiment, the flow direction in the feed path and the flow direction in the discharge path may be the same direction in the stacking direction of the cells and the cooling plates.

In the first embodiment, the downstream end of the feed path and the upstream end of the discharge path may communicate with each other via an external flow path disposed outside the cooling plate.

In the first embodiment, the shape of the spacer may be non-circular as viewed in the stacking direction in which the spacer is viewed in parallel with the stacking direction.

In the first embodiment, the outer surface of the cell and the outer surface of the cooling plate may be brought into direct contact with each other without interposing the heat dissipating grease.

### Reference Signs List

- 21: cell
- 21A: thick-walled region
- 21B: thin-walled region
- 23: layered electrode body
- 25: tab
- 31: cooling plate
- 36: heat absorbing flow path
- 38: small-diameter ring-shaped member
- 39: seal member
- 40: large-diameter ring-shaped member
- 41: heat dissipating grease
- 42: heat dissipation sheet
- 43: spacer
- 46: feed/discharge path
- 47: feed path
- 48: discharge path

## Claims

1. A secondary battery comprising:
a plurality of cells arranged at intervals;
a plurality of cooling plates each disposed between the cells adjacent to each other so as to be stacked with no gap therebetween, and
a heat absorbing flow path that allows a refrigerant to flow is formed in the cooling plates.

2. The secondary battery according to claim 1, wherein
a ring-shaped spacer is disposed between the cooling plates adjacent to each other, and
a feed/discharge path that communicates with a plurality of the heat absorbing flow paths is provided inside the spacer.

3. The secondary battery according to claim 2, further comprising:
a large-diameter ring-shaped member attached to one-side outer surface of the cooling plate; and
a small-diameter ring-shaped member attached to another-side outer surface of the cooling plate, wherein
the spacer is constituted by fitting the small-diameter ring-shaped member of one of two of the cooling plates adjacent to each other into the large-diameter ring-shaped member of another of the cooling plates.

4. The secondary battery according to claim 3, wherein a seal member is provided between the large-diameter ring-shaped member and the small-diameter ring-shaped member.

5. The secondary battery according to any one of claims 2 to 4, wherein
the spacer is disposed at each of both ends of the cooling plates in a flow direction of the refrigerant,
the feed/discharge path includes a feed path that feeds a refrigerant to a plurality of heat absorbing flow paths and a discharge path that discharges the refrigerant having passed through the plurality of heat absorbing flow paths,
the feed path is constituted by a plurality of the spacers disposed at one end of the cooling plates, and
the discharge path is constituted by a plurality of the spacers disposed at another end of the cooling plates.

6. The secondary battery according to claim 5, wherein a downstream end of the feed path and an upstream end of the discharge path are closed at one end in a stacking direction of the cells and the cooling plates.

7. The secondary battery according to any one of claims 1 to 4, wherein
each of the cells includes a layered electrode body and a tab having a thickness in a stacking direction thinner than a thickness of the layered electrode body, and
heat dissipating grease is interposed between an outer surface of a thick-walled region of the cell, in which the layered electrode body is accommodated, and the cooling plates.

8. The secondary battery according to any one of claims 1 to 4, wherein
each of the cells includes a layered electrode body and a tab having a thickness in a stacking direction thinner than a thickness of the layered electrode body, and
a heat dissipation sheet is attached to an outer surface of a thin-walled region of the cell in which the tab is accommodated.
